Europäisches Patentamt

European Patent Office

Office européen des brevets

(19)

(11) Veröffentlichungsnummer: **0 101 057**

**A2**

# (12) EUROPÄISCHE PATENTANMELDUNG

(21) Anmeldenummer: 83107870.4

(22) Anmeldetag: 09.08.83

(51) Int. Cl.³: **H 04 J 3/04**

(30) Priorität: 12.08.82 DE 3230054

(43) Veröffentlichungstag der Anmeldung:
22.02.84 Patentblatt 84/8

(84) Benannte Vertragsstaaten:
AT CH DE FR IT LI

(71) Anmelder: SIEMENS AKTIENGESELLSCHAFT
Berlin und München Wittelsbacherplatz 2
D-8000 München 2(DE)

(72) Erfinder: Magerl, Johann, Ing.-grad.
Sauerbruchstrasse 9
D-8000 München 70(DE)

(54) Demultiplexer.

(57) Der erfindungsgemäße Demultiplexer enthält eine Kettenschaltung (2) aus Leitungselementen (3 - 5), in die der zu verteilende serielle binäre Datenstrom über einen Eingang (1) eingespeist wird. Die Signallaufzeit jedes Leitungselements (3 - 5) entspricht der Bitlänge des zu verteilenden Datenstroms. Mit dem Takt T/4 der verteilten Datenströme werden die Signalzustände an den Außenanschlüssen (1, 9) und an den Abgriffen (7, 8) der Kettenschaltung (2) über D-Flipflops (10 bis 13) zu den Demultiplexer-Ausgängen (14 bis 17) weitergeleitet. Dieser Demultiplexer ist insbesondere für eine Bitfolge von 565 Mbit/s geeignet.

FIG 1

-1-

SIEMENS AKTIENGESELLSCHAFT
Berlin und München

Unser Zeichen
VPA 82 P 1 6 5 0 E

## Demultiplexer

Demultiplexer für eine bitweise Verteilung eines seriellen binären Datenstroms auf n Ausgänge.

Derartige Demultiplexer sind aus der Zeitschrift "Telcom Report", 2 (1979), Beiheft Digital-Übertragungstechnik, Seiten 59 bis 64 für eine Bitrate bis 139 Mbit/s bekannt. Die Serien-Parallelwandlung erfolgte bisher mittels Schieberegistern derart, daß die Daten nacheinander in das Register eingeschrieben und parallel zu Zeitpunkten ausgelesen wurden, die ein ganzes Vielfaches des Eingabetaktes sind. Ein praktisch eingesetzter Demultiplexer ist in der DE-PS 28 56 565 beschrieben.

Da die Datenerkennungszeit (set-up- and hold-time) der verwendeten Speicherelemente ausreichend klein gegen die Bitlänge des zu verteilenden seriellen Datenstromes sein muß, sind bei einer Bitfolge von beispielsweise 565 Mbit/s sehr schnelle Flipflops mit entsprechend hoher Verlustleistung erforderlich, was insbesondere bei einer Schaltungsrealisierung in integrierter Technik störend ist.

Aufgabe der Erfindung ist es, einen Demultiplexer für hohe Bitfolge mit niedrigerer Verlustleistung anzugeben.

Ausgehend von einem Demultiplexer der einleitend geschilderten Art wird diese Aufgabe erfindungsgemäß dadurch gelöst, daß eine Kettenschaltung aus n-1 Leitungselementen der Signallaufzeit einer Bitlänge des seriellen

Wke 1 Kom / 05.08.1982

- 2 -     VPA 82 P 1650 E

Datenstroms vorgesehen ist, daß der Eingang der Kettenschaltung als Demultiplexer-Eingang vorgesehen ist und
daß n D-Flipflops vorgesehen sind, deren Eingang entweder mit dem Eingang der Kettenschaltung oder mit dem
Ausgang jeweils eines Leitungselements verbunden sind
und deren Ausgang als Demultiplexer-Ausgänge dienen.

Ausgestaltungen der Erfindung sind den Unteransprüchen
zu entnehmen.

Anhand eines Ausführungsbeispiels wird die Erfindung
nachstehend näher erläutert.

Fig. 1 zeigt einen erfindungsgemäßen Demultiplexer und

Fig. 2 zeigt detailliert eine Entscheider- und eine Verstärkeranordnung des Demultiplexers.

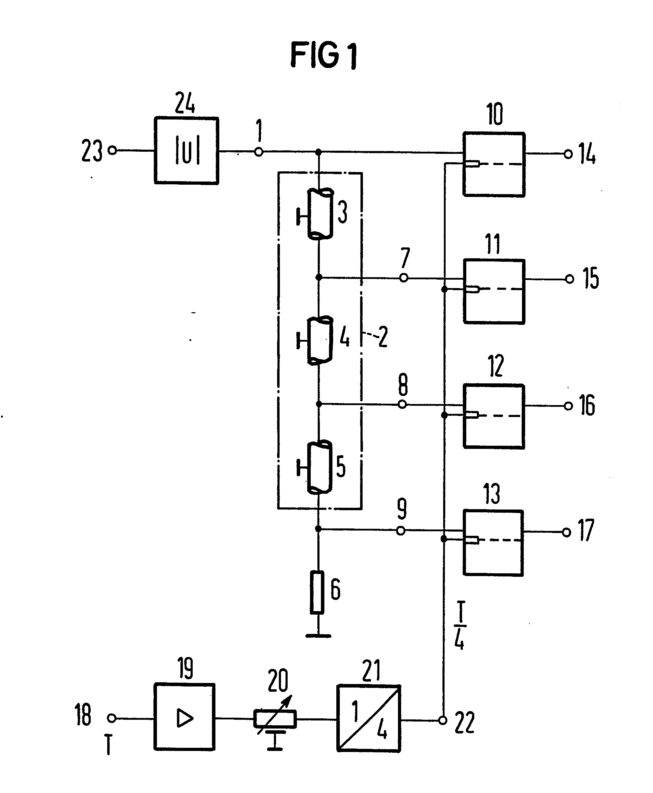

Der Demultiplexer nach der Fig. 1 weist einen Eingang 1,
eine Kettenschaltung 2 aus Leitungselementen 3 bis 5 und
einen Abschlußwiderstand 6, D-Flipflops 10 bis 13 und
Ausgänge 14 bis 17 auf. Die Taktversorgung enthält einen
Takteingang 18, einen Verstärker 19, einen Phasenschieber 20 und einen Frequenzteiler 21. Dem Eingang 1 kann
eine Entscheiderstufe 24 mit Eingang 23 vorgeschaltet
sein.

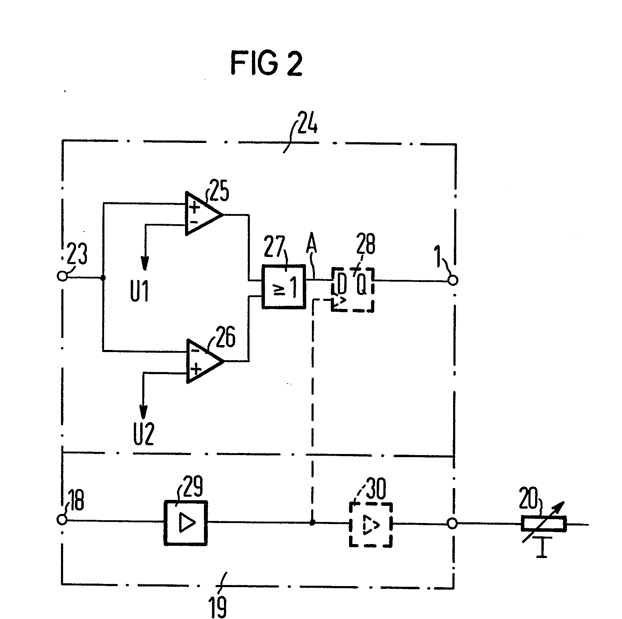

Die Entscheiderstufe 24 nach Fig. 2 enthält zwei Schwellenwertdetektoren 25 und 26, ein ODER-Gatter 27 und für
hohe Bitraten ein D-Flipflop 28. Der Verstärker 19 enthält eine Verstärkerstufe 29 und bei Einsatz des D-Flipflops 28 noch eine weitere Verstärkerstufe 30.

Wird an dem Eingang 23 ein AMI-codierter (Alternate-
Mark-Inversion) Datenstrom angelegt, so gelangt dieser
zu den Schwellenwertdetektoren 25 und 26 mit den Schwellen U1 und U2. Der Schwellenwertdetektor 25 gibt beim

- 3 -        VPA 82 P 1650 E

Überschreiten der Schwelle U1 und der Schwellenwertdetektor 26 beim Überschreiten der Schwelle U2 eine logische "1" ab. Das ODER-Gatter 27 gibt dann einen binären Datenstrom über den Eingang 1 in die Kettenschaltung 2. Die einzelnen Leitungselemente 3 bis 5 weisen eine Signallaufzeit auf, die einer Bitlänge des seriellen Datenstromes am Eingang 1 entspricht. Bei einer Bitfolge von 565 Mbit/s sind die Leitungselemente in Form von Kabeln etwa 40 cm lang. Streifenleitungen auf einem Träger mit hohem Verkürzungsfaktor können eine erheblich geringere Länge aufweisen.

An den Eingang 18 wird der Takt des seriellen Datenstroms am Eingang 1 angelegt. Dieser wird im Verstärker 29 verstärkt und gegebenenfalls im Phasenschieber 20 in der Phase korrigiert bevor er dem Frequenzteiler 21 zugeführt wird. Bei der Verteilung auf die vier Ausgänge 14 bis 17 wird der Takt T am Eingang 1 durch vier geteilt. Mit diesem Takt T/4 am Anschluß 22 übernehmen die vier D-Flipflops 10 bis 13 die Signale an den Außenanschlüssen 1 und 9 sowie an den Abgriffen 7 und 8 der Kettenschaltung 2 und geben sie an die Ausgänge 14 bis 17 weiter.

Bei hohen Bitraten ist ein Abtakten über das D-Flipflop 28 erforderlich.

Untersuchungen haben gezeigt, daß durch die D-Flipflops 10 bis 13 keine störenden Reflexionen auftreten, wenn der Wellenwiderstand $\leq 75\Omega$ ist.

6 Patentansprüche
2 Figuren

Patentansprüche

1. Demultiplexer für eine bitweise Verteilung eines seriellen binären Datenstroms auf n Ausgänge, d a d u r c h   g e k e n n z e i c h n e t , daß eine Kettenschaltung (2) aus n-1 Leitungselementen (3 - 5) der Signallaufzeit einer Bitlänge des seriellen Datenstroms vorgesehen ist, daß der Eingang der Kettenschaltung (2) als Demultiplexer-Eingang (1) vorgesehen ist und daß n D-Flipflops (10 - 13) vorgesehen sind, deren Eingang entweder mit dem Eingang (1) der Kettenschaltung (2) oder mit dem Ausgang (7 - 9) jeweils eines Leitungselements (3 - 5) verbunden sind und deren Ausgang als Demultiplexer-Ausgänge (14 - 17) dienen.

2. Demultiplexer nach Anspruch 1, d a d u r c h   g e k e n n z e i c h n e t , daß Leitungselemente (3 - 5) mit einem Wellenwiderstand von 50 $\Omega$ , 60 $\Omega$ oder 75 $\Omega$ vorgesehen sind.

3. Demultiplexer nach Anspruch 1 oder 2, d a d u r c h   g e k e n n z e i c h n e t , daß als Leitungselemente (3 - 5) Kabelstücke vorgesehen sind.

4. Demultiplexer nach Anspruch 1 oder 2, d a d u r c h   g e k e n n z e i c h n e t , daß als Leitungselemente (3 - 5) Streifenleitungen vorgesehen sind.

5. Demultiplexer nach Anspruch 4, d a d u r c h   g e k e n n z e i c h n e t , daß Streifenleitungen auf einem Träger mit einem Verkürzungsfaktor von 3...5 vorgesehen sind.

6. Demultiplexer nach Anspruch 1,
g e k e n n z e i c h n e t
durch die Anwendung bei der Verteilung eines seriellen
Datenstroms von 565 Mbit/s.

FIG 1

0101057

1/2

## FIG 2